# EUROPÄISCHE PATENTSCHRIFT

(11) **EP 0 316 758 B1**
(45) Veröffentlichungstag und Bekanntmachung des Hinweises auf die Patenterteilung: **08.06.1994**
(21) Anmeldenummer: 88118712.4
(22) Anmeldetag: 10.11.1988
(51) Int. Cl.: H04N 17/06, H04N 5/782

(54) **Verfahren zur automatischen Optimierung des Aufsprechstroms für die Aufzeichnung eines Videosignals und Anordnung zur Durchführung des Verfahrens**
Method for the automatic optimization of the recording current for the recording of a video signal, and device for carrying out the method
Procédé pour l'optimisation automatique du courant d'écriture pour l'enregistrement d'un signal vidéo et dispositif pour la mise en oeuvre de ce procédé

(30) Priorität: 19.11.1987 DE 3739180
(43) Veröffentlichungstag der Anmeldung: 24.05.1989
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Mederer, Werner c/o Grundig E.M.V. Max Grundig, D-8510 Fürth/Bay (DE); Grothaus, Ulrich c/o Grundig E.M.V. Max Grundig, D-8510 Fürth/Bay (DE); Singer, Karl c/o Grundig E.M.V. Max Grundig, D-8510 Fürth/Bay (DE)

(56) Entgegenhaltungen:
- EP-A- 0 170 032
- US-A- 4 679 097

## Beschreibung

Die Erfindung betrifft ein Verfahren zur automatischen Optimierung des Aufsprechstroms für die Aufzeichnung eines Videosignals, das zusammen mit einem Audiosignal die gleichen Spuren belegt, wobei das Audiosignal in einem ersten Aufzeichnungsschritt in den tieferen Schichten des Aufzeichnungsträgers und das Videosignal in einem zweiten Aufzeichnungsschritt in dessen oberen Schichten gespeichert wird. Die Erfindung betrifft außerdem eine Anordnung zur Durchführung des Verfahrens.

Aus "GRUNDIG Technische Informationen 2/3 - 1985, S.63-98" ist ein Videorecorder bekannt, der nach dem sogenannten "Tiefen-Multiplex-Aufnahmeverfahren" arbeitet. Verwirklicht wird dieses Aufnahmeverfahren dadurch, daß auf einem Kopfrad zu den Videoköpfen um ca. 90° voreilend die Audioköpfe angeordnet sind. Während der Aufzeichnung wird erst die Tonspur "in die Tiefe" des Magnetbandes geschrieben. Der nachfolgende Videokopf überschreibt dann das Tonsignal an der Oberfläche des Bandes. Hierbei muß der Video-Aufsprechstrom so gewählt sein, daß das bereits aufgezeichnete (frequenzmodulierte) Audiosignal nicht zu stark gelöscht wird. Der beim endgültigen Abgleich des Videorecorders einzustellende konstante Video-Aufsprechstrom kann daher nur so hoch gewählt werden, daß mit Rücksicht auf verschiedene Bandsorten oder sonstige Toleranzen im Aufzeichnungssystem ein zu starkes Löschen des Audiosignals mit Sicherheit vermieden wird. Demzufolge wird die Bildinformation nicht immer mit einem optimalen Aufsprechstrom aufgezeichnet.

Aus der deutschen Offenlegungsschrift 27 58 307 ist ein Verfahren zur automatischen Optimierung des Aufsprechstromes für die Aufzeichnung eines Videosignals bekannt. Hierzu wird der Aufsprechstrom vorzugsweise linear erhöht, das Wiedergabesignal differenziert und der Wert des Aufsprechstroms bei einem wählbaren Gradienten des Wiedergabesignals erfaßt und gespeichert. Dieses Verfahren bezieht sich jedoch ausschließlich auf die Optimierung der Videoaufzeichnung ohne Berücksichtigung einer damit gekoppelten Audioaufzeichnung.

Der Erfindung liegt die Aufgabe zugrunde, ein Verfahren der im Oberbegriff des Anspruchs 1 oder 2 angegebenen Art sowie eine Anordnung zur Durchführung des Verfahrens so auszubilden, daß der Aufsprechstrom für die Aufzeichnung des Videosignals mit Rücksicht auf das bereits aufgezeichnete Audiosignal sowie mit Rücksicht auf Toleranzen des Aufzeichnungsträgers, der Köpfe und der Kopfverstärker bezüglich der Wiedergabeempflindlichkeit stets optimal gewählt und eingestellt wird.

Diese Aufgabe wird gemäß der Erfindung durch die in den Kennzeichen der Patentansprüche 1, 2 und 3 angegebenen Maßnahmen gelöst. Vorteilhafte Ausgestaltungen der Erfindung sind in den Unteransprüchen gekennzeichnet.

Bei einem ersten Verfahren gemäß der Erfindung wird bei der Aufzeichnung des Videosignals der Aufsprechstrom hierfür stufenweise verändert. Nach jeder Veränderung des Aufsprechstroms für das Videosignal wird aus der Wiedergabehüllkurve des Audiosignals ein Gleichspannungswert als Maß für die Wiedergabeamplitude des Audiosignals ermittelt. Sobald der aus der Wiedergabehüllkurve des Audiosignals gewonnene Gleichspannungswert einen vorgegebenen Mindestwert erreicht hat, wird keine weitere Veränderung des Aufsprechstroms mehr durchgeführt.Der zuletzt eingestellte Wert wird dann für den weiteren Aufzeichnungsvorgang gespeichert.

Bei einem zweiten Verfahren gemäß der Erfindung wird bei der Aufzeichnung des Videosignals der Aufsprechstrom hierfür zwischen einem Minimal- und einem Maximalwert stufenweise verändert. Gleichzeitig wird der zeitliche Verlauf der Aufsprechstromänderung gespeichert. Nach erfolgter Aufzeichnung des Videosignals wird der Aufzeichnungsträger an den Anfang der Aufzeichnung zurückgefahren. Anschließend wird in einem Wiedergabevorgang aus der Wiedergabehüllkurve des Audiosignals ein entsprechend zeitabhängiger Gleichspannungsverlauf als Maß für die von der Videoaufzeichnung abhängige Wiedergabeamplitude des Audiosignals ermittelt. Aus dem Gleichspannungsverlauf des wiedergegebenen Audiosignals und aus dem abgespeicherten Zeitverlauf für die Aufsprechstromänderung des Videosignals kann dann der zu einem vorgegebenen Audiosignalmindestwert gehörende Aufsprechstrom für das Videosignal als Optimum ermittelt und abgespeichert werden.

Durch die beiden Verfahren gemäß der Erfindung wird in vorteilhafter Weise stets der optimale Wert für den Video-Aufsprechstrom ermittelt, und zwar bei gerade noch vertretbarer Dämpfung des in der gleichen Spur bereits aufgezeichneten Audiosignals.

Vorzugsweise wird der Abgleichvorgang für den Aufsprechstrom des Videosignals bei jeder Neuaufzeichnung und/oder nach jedem Bandwechsel vorgenommen. Hierdurch ergibt sich für die Bild- und Tonaufzeichnung auch unabhängig von der Bandsorte immer eine optimale Qualität.

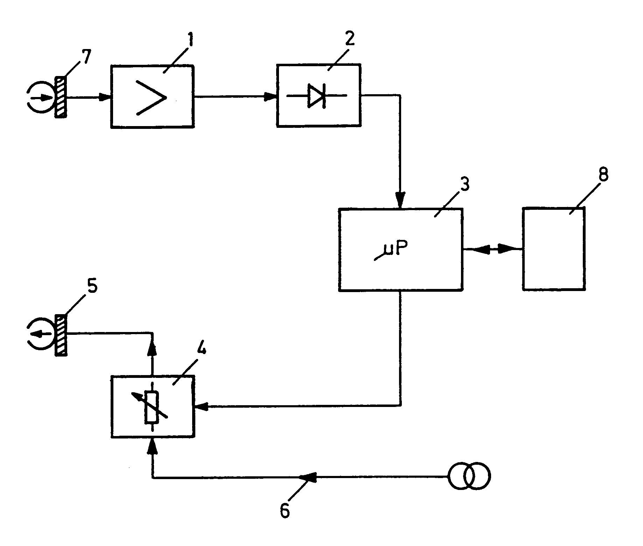

Ein Ausführungsbeispiel für eine prinzipielle Anordnung zur Durchführung der Verfahren gemäß der Erfindung ist im folgenden anhand einer Zeichnung näher erläutert. Die Figur zeigt ein Blockschaltbild für eine solche Anordnung.

Im Wiedergabezweig für das von den Audioköpfen 7 abgetastete Audiosignal sind eine Verstärkereinrichtung 1 sowie eine Detektoreinrichtung 2 vorgesehen, mit deren Hilfe aus dem abgetasteten Audiosignal ein Gleichspannungssignal gewonnen wird, das ein Maß für die wiedergegebene Audiosignalamplitude darstellt. Dieses Gleichspannungssignal wird einem Rechner 3 zugeführt. Dieser Rechner steuert für die Durchführung des Verfahrens nach Anspruch 1 im übrigen auch die sich abwechselnden Aufnahme- und Wiedergabezyklen der Audio- und Videoköpfe, und zwar derart, daß das von einem Audiokopf in einem ersten Zyklus aufgezeichnete und von einem Videokopf überschriebene Audiosignal in einem zweiten Zyklus wieder gelesen wird, um abhängig von der wiedergegebenen Audiosignalamplitude eine Veränderung des Video-Aufsprechstroms auszulösen oder nicht. Zur Veränderung bzw. Einstellung des Video-Aufsprechstroms ist im Aufnahmezweig für das Videosignal ein elektronischer Steller 4 vorgesehen, über den, gesteuert vom Rechner 3, der Aufsprechstrom 6 für die Videoköpfe 5 verändert bzw. eingestellt werden kann, und zwar in Abhängigkeit von dem gewonnenen Gleichspannungssignal für die Wiedergabeamplitude des Audiosignals. Mit dem Rechner 3 ist schließlich noch ein Speicher 8 gekoppelt, der die für den Abgleichvorgang erforderlichen Zwischenwerte sowie den bei dem Abgleichvorgang ermittelten optimalen Steuerwert für die Einstellung des elektronischen Stellers 4 speichert.

Bei einem bevorzugten Ausführungsbeispiel ist noch eine Einrichtung vorgesehen, mit deren Hilfe der Abgleichvorgang für den Aufsprechstrom des Videosignals nicht nur automatisch bei jeder Neuaufzeichnung und/oder nach jedem Einlegen einer neuen Kassette, sondern auch manuell auslösbar ist.

## Patentansprüche

1. Verfahren zur automatischen Optimierung des Aufsprechstroms für die Aufzeichnung eines Videosignals, das zusammen mit einem Audiosignal die gleichen Spuren belegt, wobei das Audiosignal in einem ersten Aufzeichnungsschritt in den tieferen Schichten des Aufzeichnungsträgers und das Videosignal in einem zweiten Aufzeichnungsschritt in dessen oberen Schichten gespeichert wird,
**dadurch gekennzeichnet**,
daß bei der Aufzeichnung des Videosignals der Aufsprechstrom hierfür stufenweise verändert wird, daß nach jeder Veränderung des Aufsprechstroms für das Videosignal aus der Wiedergabehüllkurve des Audiosignals ein Gleichspannungswert als Maß für die Wiedergabeamplitude des Audiosignals ermittelt wird, und daß die Veränderung des Aufsprechstroms für die Aufzeichnung des Videosignals beendet und der zuletzt vorliegende Wert gespeichert und für nachfolgende Aufzeichnungen des Videosignals verwendet wird, sobald der aus der Wiedergabehüllkurve des Audiosignals gewonnene Gleichspannungswert einen vorgegebenen Mindestwert erreicht hat.

2. Verfahren zur automatischen Optimierung des Aufsprechstroms für die Aufzeichnung eines Videosignals, das zusammen mit einem Audiosignal die gleichen Spuren belegt, wobei das Audiosignal in einem ersten Aufzeichnungsschritt in den tieferen Schichten des Aufzeichnungsträgers und das Videosignal in einem zweiten Aufzeichnungsschritt in dessen oberen Schichten gespeichert wird,
**dadurch gekennzeichnet**,
daß bei der Aufzeichnung des Videosignals der Aufsprechstrom hierfür zwischen einem Minimal- und einem Maximalwert stufenweise verändert wird, daß der zeitliche Verlauf der Aufsprechstromänderung gespeichert wird, daß nach erfolgter Aufzeichnung des Videosignals der Aufzeichnungsträger an den Anfang der Aufzeichnung zurückgefahren wird, daß anschließend aus der Wiedergabehüllkurve des Audiosignals ein entsprechend zeitabhängiger Gleichspannungsverlauf als Maß für die von der Videoaufzeichnung abhängige Wiedergabeamplitude des Audiosignals ermittelt wird, und daß aus dem Gleichspannungsverlauf des wiedergegebenen Audiosignals und aus dem abgespeicherten Zeitverlauf für die Aufsprechstromänderung des Videosignals der zu einem vorgegebenen Audiosignalmindestwert gehörende Aufsprechstrom für das Videosignal als Optimum ermittelt und abgespeichert wird, um für nachfolgende Aufzeichnungen verwendet zu werden.

3. Verfahren nach Anspruch 1 oder 2, **dadurch gekennzeichnet,** daß der Abgleichvorgang für den Aufsprechstrom des Videosignals bei jeder Neuaufzeichnung und/oder nach jedem Bandwechsel vorgenommen wird.

4. Anordnung zur Durchführung des Verfahrens nach einem der Ansprüche 1 bis 3,
**gekennzeichnet durch**
eine Verstärkereinrichtung (1) sowie eine Detektoreinrichtung (2), im Signalweg der Audioköpfe (7), zur Ableitung des Gleichspannungswertes der Wiedergabehüllkurve des Audiosignals,
einem elektronischen Steller (4) im Aufnahmezweig des Videosignals zur Veränderung des Aufsprechstroms (6), und einem Rechner (3) mit einem damit in Verbindung stehenden Speicher (8) zur verfahrensmäßigen Auswertung des abgeleiteten Gleichspannungswertes und zur Steuerung des Stellers (4) während der Auswertung sowie zu seiner Einstellung während nachfolgender Aufzeichnungen auf den bei der Auswertung ermittelten Wert.

5. Anordnung nach Anspruch 4, **dadurch gekennzeichnet,** daß eine Einrichtung vorgesehen ist, mit der der Abgleichvorgang für den Aufsprechstrom des Videosignals manuell auslösbar ist.

## Claims

1. Method for the automatic optimization of the recording current for recording a video signal which occupies the same tracks together with an audio signal, the audio signal being stored in the lower layers of the recording medium in a first recording step and the video signal being stored in its upper layers in a second recording step, characterized in that during the recording of the video signal, the recording current for this is changed step by step, in that after each change of the recording current for the video signal, a direct-voltage value is determined as a measure of the replay amplitude of the audio signal from the replay envelope curve of the audio signal after each change of the recording current for the video signal, and in that the change of the recording current for the recording of the video signal is ended and the last available value is stored and used for subsequent recordings of the video signal as soon as the direct-voltage value obtained from the replay envelope curve of the audio signal has reached a predetermined minimum value.

2. Method for the automatic optimization of the recording current for recording a video signal which occupies the same tracks together with an audio signal, the audio signal being stored in the lower layers of the recording medium in a first recording step and the video signal being stored in its upper layers in a second recording step, characterized in that during the recording of the video signal, the recording current for this is changed step by step between a minimum and a maximum value, in that the variation of the recording current change with time is stored, in that the recording medium is moved back to the start of the recording after the completed recording of the video signal, in that subsequently a correspondingly time-dependent direct-voltage variation is determined as a measure of the video-recording-dependent replay amplitude of the audio signal from the replay envelope curve of the audio signal, and in that the recording current for the video signal, belonging to a predetermined minimum audio signal value, is determined as optimum from the direct-voltage variation of the replayed audio signal and from the stored time variation for the recording current change of the video signal and is stored in order to be used for subsequent recordings.

3. Method according to Claim 1 or 2, characterized in that the calibration process for the recording current of the video signal is carried out with each new recording and/or after each tape change.

4. Arrangement for carrying out the method according to one of Claims 1 to 3, characterized by an amplifier device (1) and a detector device (2) in the signal path of the audio heads (7) for extracting the direct-voltage value of the replay envelope curve of the audio signal, an electronic controller (4) in the recording branch of the video signal for changing the recording current (6), and a computer (3) with a memory (8) connected thereto for evaluating the extracted direct-voltage value according to the method and for controlling the controller (4) during the evaluation and for adjusting it to the value determined during the evaluation during subsequent recordings.

5. Arrangement according to Claim 4, characterized in that a device is provided by means of which the calibration process for the recording current of the video signal can be manually triggered.

## Revendications

1. Procédé pour l'optimisation automatique du courant d'enregistrement pour l'enregistrement d'un signal vidéo, qui occupe les mêmes pistes qu'un signal audio, le signal audio étant mémorisé, lors d'une première étape d'enregistrement, dans les couches plus profondes du support d'enregistrement, tandis que le signal vidéo est enregistré, lors d'une seconde étape d'enregistrement, dans les couches supérieures du support d'enregistrement, caractérisé en ce que lors de l'enregistrement du signal vidéo, le courant d'enregistrement est, à cet effet, modifié par échelons, qu'après chaque modification du courant d'enregistrement pour le signal vidéo, une valeur de tension continue est déterminée, à partir de la courbe enveloppe de reproduction du signal audio, en tant que mesure de l'amplitude de reproduction du signal audio, et que la modification du courant d'enregistrement pour l'enregistrement du signal vidéo et la valeur présente en dernier lieu est mémorisée et est utilisée pour des enregistrements ultérieurs du signal vidéo, dès que la valeur de tension continue obtenue à partir de la courbe enveloppe de reproduction du signal vidéo a atteint une valeur minimale prédéterminée.

2. Procédé pour l'optimisation automatique du courant d'enregistrement pour l'enregistrement d'un signal vidéo, qui occupe les mêmes pistes qu'un signal audio, le signal audio étant mémorisé, lors d'une première étape d'enregistrement, dans les couches plus profondes du support d'enregistrement, tandis que le signal vidéo est enregistré, lors d'une seconde étape d'enregistrement, dans les couches supérieures du support d'enregistrement, caractérisé en ce que lors de l'enregistrement du signal vidéo, le courant d'enregistrement est, à cet effet, modifié par échelons, entre une valeur minimale et une valeur maximale, que la variation dans le temps du courant d'enregistrement est mémorisée, qu'une fois réalisé l'enregistrement du signal vidéo, le support d'enregistrement est ramené au début de l'enregistrement, qu'ensuite une variation de tension continue, qui présente une dépendance correspondante vis-à-vis du temps, est déterminée à partir de la courbe enveloppe de reproduction du signal audio, en tant que mesure de l'amplitude de reproduction, qui dépend de l'amplitude vidéo, du signal audio et que le courant d'enregistrement, qui est associé à une valeur minimale du signal audio, est déterminé comme optimum pour le signal vidéo, à partir de l'allure dans le temps, mémorisée, de la variation du courant d'enregistrement du signal vidéo, et est mémorisé pour être utilisé pour des enregistrements ultérieurs.

3. Procédé selon la revendication 1 ou 2, caractérisé en ce que le processus d'équilibrage pour le courant d'enregistrement du signal vidéo est mis en oeuvre lors de chaque nouvel enregistrement et/ou après chaque changement de bande.

4. Dispositif pour la mise en oeuvre du procédé selon l'une des revendications 1 à 3, caractérisé par
un dispositif amplificateur (1) ainsi qu'un dispositif détecteur (2), disposés dans la branche de transmission des signaux des têtes audio (7), pour l'obtention de la valeur de tension continue de la courbe enveloppe de reproduction du signal audio,
un régulateur électronique (4) inséré dans la branche de réception du signal vidéo pour modifier le courant d'enregistrement (6), et
un calculateur (3) équipé d'une mémoire (8) qui lui est raccordée pour évaluer, conformément au procédé, la valeur de tension continue obtenue et à commander le régulateur (4) pendant l'évaluation et le régler pendant des enregistrements suivants, sur la valeur déterminée lors de l'évaluation.

5. Dispositif selon la revendication 4, caractérisé en ce qu'il est prévu un dispositif au moyen duquel le processus d'équilibrage peut être déclenché manuellement pour le courant d'enregistrement du signal vidéo.
